# EUROPÄISCHE PATENTANMELDUNG

(11) **EP 3 646 726 A1**
(43) Veröffentlichungstag der Anmeldung: **06.05.2020**
(21) Anmeldenummer: 18204105.3
(22) Anmeldetag: 02.11.2018
(51) Int. Cl.: A01M 21/04

(54) **BEKÄMPFUNG VON PFLANZEN MITTELS ELEKTRISCHER ENERGIE**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Erfindung befasst sich mit der Bekämpfung von Pflanzen, die als unerwünschte Begleiter in einem Feld für Kulturpflanzen in Erscheinung treten, mittels elektrischer Energie. Gegenstände der vorliegenden Erfindung sind ein Verfahren, eine Vorrichtung und ein Fahrzeug zur Bekämpfung der Pflanzen.

## Beschreibung

Die vorliegende Erfindung befasst sich mit der Bekämpfung von Pflanzen, die als unerwünschte Begleiter in einem Feld für Kulturpflanzen in Erscheinung treten, mittels elektrischer Energie. Gegenstände der vorliegenden Erfindung sind ein Verfahren, eine Vorrichtung und ein Fahrzeug zur Bekämpfung der Pflanzen.

Beim Anbau von Kulturpflanzen in einem Feld treten üblicherweise unerwünschte Begleitpflanzen in Erscheinung, die mit den Kulturpflanzen um Ressourcen konkurrieren, die Durchführung landwirtschaftlicher Maßnahmen behindern oder erschweren, die Qualität der Ernte beeinträchtigen oder in sonstiger Weise den Anbau der Kulturpflanzen in negativer Weise beeinträchtigen. Es kann sich bei diesen Kulturpflanzenbegleitern zum Beispiel um Unkräuter/Ungräser oder um Pflanzen handeln, die in einer vorangegangenen Vegetationsperiode in dem Feld angebaut worden sind und nun austreiben.

Für die Bekämpfung von unerwünschten Pflanzen stehen generell eine Reihe von Maßnahmen zur Verfügung, wie beispielsweise die Applikation eines Herbizids, das mechanische Entfernen oder die Bekämpfung mit elektrischer Energie.

Die Applikation eines Herbizids ist nur dann sinnvoll, wenn der Kulturpflanzenbegleiter selektiv bekämpft werden kann, ohne dass die umgebenden Kulturpflanzen Schaden nehmen. Das mechanische Entfernen ist vergleichsweise mühsam und/oder kostenaufwändig.

Die Bekämpfung von Pflanzen mittels elektrischer Energie ist seit Jahrzehnten bekannt und im Stand der Technik ausgiebig beschrieben (siehe z.B. US248443, US2591597, US2682729, US4047326, US4428150, WO16016627, WO16162667, WO2018050137, WO2018050138, WO2018050142, WO2018050143, WO2018095450, WO2018095451).

Auch die Bekämpfung von Kulturpflanzenbegleitern in einem Feld von Kulturpflanzen mittels elektrischer Energie ist im Stand der Technik beschrieben. M.F. Diprose et al. berichten über die Bekämpfung von Schosserrüben in einem Zuckerrübenfeld (Use of electricity to control bolters in sugar beet (Beta vulgaris L.): a comparison of the electrothermal with chemical and mechanical cutting methods, Weed Research, 10985, 25, 53-60). Kontaktelektroden wurden in einem Abstand von etwa 5-15 cm oberhalb der Zuckerrüben über das Feld bewegt und berührten dabei die größeren Schosserrüben. Bei Berührung floss ein Strom durch die Schosserrüben und machte sie unschädlich; die kleineren Zuckerrüben blieben verschont. Mit dem beschriebenen Ansatz ist nur eine Bekämpfung von Kulturpflanzenbegleitern möglich, die größer als die umgebenden Kulturpflanzen sind.

Ausgehend vom beschriebenen Stand der Technik stellt sich einem Fachmann die objektive technische Aufgabe, Mittel bereitzustellen, die es erlauben, Kulturpflanzenbegleiter zu bekämpfen, die kleiner als die umgebenden Kulturpflanzen sind, ohne die umgebenden Kulturpflanzen zu beeinträchtigen.

Diese Aufgabe wird durch die Gegenstände der unabhängigen Patentansprüche gelöst. Bevorzugte Ausführungsformen finden sich in den abhängigen Patentansprüchen sowie in der vorliegenden Beschreibung und den Figuren.

Ein erster Gegenstand der vorliegenden Erfindung ist somit ein Verfahren zur Bekämpfung von Kulturpflanzenbegleitern in einem Feld von Kulturpflanzen,
- Bereitstellen einer Vorrichtung umfassend einen Halmteiler und eine Kontaktelektrode,
- Bringen des Halmteilers auf eine Höhe, die oberhalb der Wuchshöhe der Kulturpflanzenbegleiter und unterhalb der Wuchshöhe der Kulturpflanzen liegt,
- Bringen der Kontaktelektrode auf eine Höhe, die unterhalb des Halmteilers in Wuchshöhe der Kulturpflanzenbegleiter liegt,
- Bewegen der Vorrichtung durch ein Feld für Kulturpflanzen, in dem Kulturpflanzenbegleiter auftreten,
- während des Bewegens
   ∘ Vorbeiführen der Kulturpflanzen an der Kontaktelektrode mittels des Halmteilers,
   ∘ Kontaktieren der Kulturpflanzenbegleiter mit der Kontaktelektrode, wobei bei einem Kontakt der Kontaktelektrode mit einem Kulturpflanzenbegleiter ein Strom von der Kontaktelektrode durch einen Teil des Kulturpflanzenbegleiters zu einer Gegenelektrode fließt, wobei der Kulturpflanzenbegleiter geschwächt oder zerstört wird.

Ein weiterer Gegenstand der vorliegenden Erfindung ist eine Vorrichtung zur Bekämpfung von Kulturpflanzenbegleitern in einem Feld von Kulturpflanzen, umfassend
- einen Halmteiler, umfassend zwei Schenkel, wobei die Schenkel in einer Spitze zusammenlaufen,
- eine Kontaktelektrode, wobei sich die Kontaktelektrode
   ∘ unterhalb des Halmteilers befindet und
   ∘ an einer Seite des Halmteiler befindet, die der Spitze des Halmteilers gegenüber liegt,
- Befestigungsmittel zum Befestigen des Halmteilers an einem Fahrzeug in einer Höhe, die oberhalb der Wuchshöhe der Kulturpflanzenbegleiter und unterhalb der Wuchshöhe der Kulturpflanzen liegt.

Ein weiterer Gegenstand der vorliegenden Erfindung ist ein Fahrzeug zur Bekämpfung von Kulturpflanzenbegleitern in einem Feld von Kulturpflanzen, umfassend
- einen Halmteiler, umfassend zwei Schenkel, wobei die Schenkel in einer Spitze zusammenlaufen,
- eine Kontaktelektrode,
- eine Spannungsquelle und
- eine Gegenelektrode,
dadurch gekennzeichnet, dass der Halmteiler höhenverstellbar ist und sich die Kontaktelektrode, unterhalb des Halmteilers befindet und an einer Seite des Halmteiler befindet, die der Spitze des Halmteilers gegenüber liegt.

Ein weiterer Gegenstand der vorliegenden Erfindung betrifft die Verwendung des erfindungsgemäßen Fahrzeugs und/oder der erfindungsgemäßen Vorrichtung zur Bekämpfung von Pflanzenbegleitern in einem Feld von Kulturpflanzen, wobei die Pflanzenbegleiter eine geringere Wuchshöhe aufweise als die Kulturpflanzen.

Die Erfindung wird nachstehend näher erläutert, ohne zwischen den Erfindungsgegenständen (Verfahren, Vorrichtung, Fahrzeug, Verwendung) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, Fahrzeug, Verwendung) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Kulturpflanzenbegleiter" wird eine Pflanze verstanden, die zwischen den angebauten Kulturpflanzen wächst aber im Gegensatz zu den Kulturpflanzen nicht gezielt angebaut worden ist, um in der aktuellen Vegetationsperiode einen Ernteertrag oder einen anderen Zweck zu erfüllen. Es kann sich bei einem Kulturpflanzenbegleiter um Unkräuter, Ungräser, verwilderte Kulturpflanzen, Durchwuchspflanzen, Ausfallpflanzen oder dergleichen handeln. Kulturpflanzenbegleiter im Sinne der vorliegenden Erfindung sind demnach Pflanzen, die beim Anbau einer gewünschten Kulturpflanze als unerwünschte Begleitung auftreten. Sie können die Qualität und/oder Quantität der Ernte beeinträchtigen, indem sie mit der Kulturpflanze um Ressourcen konkurrieren, das Durchführen landwirtschaftlicher Maßnahmen erschweren die geernteten Kulturpflanzen verunreinigen. Kulturpflanzenbegleiter sollen daher bekämpft werden.

Unter dem Begriff "Bekämpfung" wird eine Verhinderung der Ausbreitung oder Reduzierung der Menge an vorhandenen Kulturpflanzenbegleitern verstanden.

Die Bekämpfung erfolgt mit einer Vorrichtung, die durch das Feld, in dem die Kulturpflanzen angebaut werden, bewegt wird. Hierzu weist die Vorrichtung Befestigungsmittel auf, mit der die Vorrichtung an einem Fahrzeug befestigt werden kann. Das Fahrzeug kann ein motorbetriebenes Fahrzeug sein, das sich auf Rädern, Schienen oder Ketten durch das Feld bewegt, wie beispielsweise eine Landmaschine, ein Traktor, ein Unimog oder dergleichen. Vorzugsweise bewegt sich das Fahrzeug autonom, d.h. ohne menschliches Zutun, durch das Feld.

Während der Bewegung bekämpft die Vorrichtung selektiv Kulturpflanzenbegleiter, während Kulturpflanzen außer Acht gelassen werden.

Dies geschieht dadurch, dass die Kulturpflanzenbegleiter von den umgebenden Kulturpflanzen mittels eines Halmteilers separiert werden.

Halmteiler (engl. *crop divider*) sind vielfältig im Stand der Technik beschrieben (siehe z.B. GB151624A, GB175015A, DE513153 (C), AT122999 B, US2209047A, US2365790A, GB567950A, US2016057933, WO15159464A1). Ihre Aufgabe besteht üblicherweise darin, einen Teil von Kulturpflanzen aus einem Bestand von Kulturpflanzen zu separieren, um diesen Teil zu bearbeiten (z.B. zu ernten). Ein solcher Halmteiler ist an der erfindungsgemäßen Vorrichtung angebracht. Dabei befindet er sich in Bewegungsrichtung der erfindungsgemäßen Vorrichtung vor der Kontaktelektrode. Der Halmteiler ist ferner in einer Höhe angebracht, die sich unterhalb der oberen Enden der Kulturpflanzen und oberhalb der oberen Enden der Kulturpflanzenbegleiter befindet.

Es ist auch denkbar, dass die erfindungsgemäße Vorrichtung mehrere Halmteiler umfasst. Diese sind vorzugsweise nebeneinander und voneinander beabstandet so angeordnet, dass sie sich vorzugsweise senkrecht zur Schwerkraft und quer zur Bewegungsrichtung erstrecken.

"Quer zur Bewegungsrichtung" bezeichnet eine Richtung, die sich in einem Winkel von mindestens 30° und höchstens 150°, vorzugsweise mindestens 45° und höchstens 135°, noch mehr bevorzugt mindestens 60° und höchstens 120° zur Bewegungsrichtung erstreckt. Vorzugsweise spannen die Bewegungsrichtung und die Richtung "quer zur Bewegungsrichtung" eine Ebene auf, die tangential zur Erdoberfläche verläuft.

Ein Halmteiler kann so ausgeführt sein, dass er nach vorne (in Bewegungsrichtung der erfindungsgemäßen Vorrichtung) spitz zuläuft.

Bewegt sich der Halmteiler durch das Feld, werden die Kulturpflanzen durch den Halmteiler zur Seite bewegt und an dem Halmteiler entlang nach hinten geführt. Hinter dem Halmteiler bewegen sich die Kulturpflanzen in ihre jeweilige Ausgangslage zurück.

Am hinteren Ende des Halmteilers ist eine Kontaktelektrode vorzugsweise quer zur Bewegungsrichtung der Vorrichtung angebracht.

Der Halmteiler führt die Kulturpflanzen an der Kontaktelektrode vorbei. Die Kulturpflanzenbegleiter werden hingegen aufgrund ihrer geringeren Wuchshöhe nicht von dem Halmteiler erfasst und nicht zu den Seiten des Halmteilers geführt und nicht an der Kontaktelektrode vorbeigeführt. Stattdessen bewegt sich der Halmteiler über die Kulturpflanzenbegleiter hinweg.

Die Kontaktelektrode ist in einer Höhe angeordnet, in der sie Teile der Kulturpflanzenbegleiter berührt, wenn sich der Halmteiler über die Kulturpflanzenbegleiter hinweg bewegt. Die Kontaktelektrode befindet sich also in Wuchshöhe der Kulturpflanzenbegleiter. Bei Berührung der Kontaktelektrode, fließt ein elektrischer Strom durch einen Teil des Kulturpflanzenbegleiters und der Kulturpflanzenbegleiter wird durch den elektrischen Strom unschädlich macht.

Vorzugsweise sind der Halmteiler und die Kontaktelektrode höhenbeweglich ausgeführt, so dass sie an die Wuchshöhe der Kulturpflanzen und Kulturpflanzenbegleiter angepasst werden können. Es ist denkbar, dass die Höhenanpassung von Halmteiler und Kontaktelektrode unabhängig voneinander erfolgt; es ist aber auch denkbar, dass die Kontaktelektrode mit dem Halmteiler verbunden ist und eine Höhenanpassung von Kontaktelektrode und Halmteiler gleichzeitig erfolgt.

Vorzugsweise verfügt das erfindungsgemäße Fahrzeug über eine Höhenanpassungseinheit, mit der die Höhe des Halmteilers und/oder der Kontaktelektrode variiert werden kann. Unter dem Begriff "Höhe" wird der Abstand der Unterkante des Halmteilers bzw. der Kontaktelektrode zum Erdboden verstanden. Der Begriff "Unterkante" bezeichnet den Teil des Halmteilers bzw. der Kontaktelektrode, der den geringsten Abstand zum Erdboden aufweist.

Vorzugsweise erfolgt die Höhenanpassung automatisch. Es ist beispielsweise denkbar, dass die Vorrichtung oder das Fahrzeug über eine oder mehrere Kameras verfügt, mit der/denen ermittelt wird, auf welcher Höhe die Kulturpflanzen und/oder die Kulturpflanzenbegleiter enden (Wuchshöhe). Auch mit einem oder mehreren Abstandssensoren lässt sich eine Wuchshöhe von Pflanzen ermitteln. Abstandssensoren sind in vielfältiger Form kommerziell verfügbar und beruhen auf unterschiedlichen Messprinzipien wie Radar (W. Paul, H. Speckmann: Radarsensoren - Neue Technologien zur präzisen Bestandsführung, Landtechnik 59, 2/2004, Seiten 92 bis 93.), Laserlicht (https://www.researchgate.net/publication/265943938) oder Ultraschall (D. Nieberg et al.: *Multireflex-Ultraschall-Sensorsystem zur Feld-Phänotypisierung von Getreide,* https://www.hs-osnabrueck.de/fileadmin/HSOS/Homepages/COALA/Veroeffentlichungen/2014-VDI-Tagung-Multireflex-Ultraschall-Sensorsystem_zur_Feld-Phaenotypisierung_von_Getreide_.pdf).

Die Kontaktelektrode kann als Ausleger, Netz, Gitter, Band, Bürste oder dergleichen ausgeführt sein. Anstelle einer Kontaktelektrode können auch mehrere Kontaktelektroden vorhanden sein.

Auch die Gegenelektrode kann als Ausleger, Netz, Gitter, Band, Bürste oder dergleichen ausgeführt sein. Es ebenfalls denkbar, dass mehrere Gegenelektroden vorhanden sind.

Zur Bekämpfung der Kulturpflanzenbegleiter wird zwischen der Kontaktelektrode und der Gegenelektrode eine Spannung angelegt.

Die Spannung wird über eine Spannungsquelle erzeugt, die üblicherweise ein Bestandteil der erfindungsgemäßen Vorrichtung oder des erfindungsgemäßen Fahrzeugs ist. Es ist aber prinzipiell auch denkbar, dass die Spannungsquelle stationär im Feld aufgebaut ist und über eine Kabelverbindung mit der Kontaktelektrode und der Gegenelektrode verbunden ist. Die Spannungsquelle kann ein Generator oder ein Akkumulator sein.

Ein Strom fließt üblicherweise nur dann zwischen der Kontaktelektrode und der Gegenelektrode, wenn der elektrische Widerstand zwischen der Kontaktelektrode und der Gegenelektrode reduziert wird, zum Beispiel dadurch, dass Teile einer Pflanze zwischen die Kontaktelektrode und die Gegenelektrode gebracht werden, die einen geringeren Widerstand als die umgebende Luft haben. Der Strom fließt dann durch diese Teile der Pflanzen, je nach (aktueller) Polung entweder von der Kontaktelektrode zur Gegenelektrode oder von der Gegenelektrode zur Kontaktelektrode. Bei Verwendung einer Wechselspannung fließt der Strom alternierend von der Kontaktelektrode durch die Pflanzenteile zur Gegenelektrode und von der Gegenelektrode durch die Pflanzenteile zur Kontaktelektrode. Geeignete Paramater (Stromstärke, Spannung, Frequenz) zur Bekämpfung von Kulturpflanzenbegleitern können dem Stand der Technik entnommen werden (siehe z.B. US248443, US2591597, US2682729, US4047326, US4428150, WO16016627, WO16162667, WO2018050137, WO2018050138, WO2018050142, WO2018050143, WO2018095450, WO2018095451, M.F. Diprose et al.,Weed Research, 10985, 25, 53-60).

Bei der Bekämpfung von Pflanzen mittels elektrischer Energie ist es üblich, die Gegenelektrode nicht direkt in Kontakt mit der zu bekämpfenden Pflanze zu bringen sondern die Gegenelektrode in Kontakt mit dem Erdboden, in dem die Pflanze wächst, zu bringen, da hierdurch der Strom auch durch die Wurzeln der Pflanze fließt und damit auch die Wurzeln geschädigt werden, was eine besonders effektive Bekämpfung der Pflanze darstellt.

Vorzugsweise steht die Gegenelektrode auch im Fall der vorliegenden Erfindung in Kontakt mit dem Erdboden.

Die Gegenelektrode kann ein Bestandteil der erfindungsgemäßen Vorrichtung sein, sie kann ein Bestandteil des erfindungsgemäßen Fahrzeugs sein, an dem die erfindungsgemäße Vorrichtung befestigt werden kann, sie kann aber auch ein von der Vorrichtung und dem Fahrzeug unabhängiger Gegenstand sein. In einer bevorzugten Ausführungsform ist die Gegenelektrode ein Bestandteil des Fahrzeugs und steht in Kontakt mit dem Erdboden oder kann in Kontakt mit dem Erdboden gebracht werden. Es ist denkbar, dass die Gegenelektrode als ein Schleifkontakt ausgeführt ist, der bei Bewegung der Vorrichtung durch das Feld auf dem Boden schleift. Es ist auch denkbar, dass ein oder mehrere Räder des Fahrzeugs bzw. der Vorrichtung als Gegenelektrode ausgeführt sind.

Es ist denkbar, dass dauerhaft eine Spannung zwischen Kontaktelektrode und Gegenelektrode besteht. Sobald die Kontaktelektrode mit einer Pflanze in Berührung kommt, fließt ein Strom zwischen der Kontaktelektrode und der Gegenelektrode durch die Pflanze. Denkbar ist aber auch, dass die Kontaktelektrode und Gegenelektrode spannungslos gehalten werden und nur dann eine Spannung zwischen der Kontaktelektrode und der Gegenelektrode angelegt wird, wenn sich ein Kulturpflanzenbegleiter der Kontaktelektrode nähert. Dies kann durch Abstandssensoren oder Lichtschranken erreicht werden. Es ist beispielsweise denkbar, dass an den Schenkeln des Halmteilers Führungsflanken angebracht sind, zwischen denen eine Lichtschranke vor der Kontaktelektrode angebracht ist. Die Führungsflanken unterstützen das Vorbeiführen von Kulturpflanzen an der Kontaktelektrode. Kleinere Kontaktpflanzenbegleiter werden von den Führungsflanken nicht erfasst und geraten zwischen die Führungsflanken unterhalb des Halmteilers. Sie unterbrechen die Lichtschranke, wodurch eine Spannung zwischen Kontaktelektrode und Gegenelektrode freigeschaltet wird. Es ist ferner denkbar, Kontaktsensoren zu verwenden, die dann die Spannung zwischen Kontaktelektrode und Gegenelektrode freischalten, wenn die Kontaktelektrode in Berührung mit einem Kulturpflanzenbegleiter kommt.

Die erfindungsgemäße Vorrichtung kann so ausgeführt sein, dass sie neben Kulturpflanzenbegleitern mit einer geringeren Wuchshöhe als die umgebenden Kulturpflanzen ("kleinere Kulturpflanzenbegleiter") auch Kulturpflanzenbegleiter mit einer größeren Wuchshöhe als die umgebenden Kulturpflanzen ("größere Kulturpflanzenbegleiter") bekämpfen kann. Es ist denkbar, dass in einem ersten Arbeitsgang die Kontaktelektrode auf eine Höhe gebracht wird, die oberhalb der Wuchshöhe der Kulturpflanzen und unterhalb der Wuchshöhe der größeren Kulturpflanzenbegleiter gebracht wird. Der Halmteiler befindet sich oberhalb der Kontaktelektrode, und damit oberhalb der Kulturpflanzen, aber auch oberhalb der größeren Kulturpflanzenbegleiter (er führt also in dieser Höhe keine Funktion aus). Die Kontaktelektrode wird durch das Feld bewegt und kontaktiert ausschließlich die größeren Kulturpflanzenbegleiter und macht diese unschädlich. In einem zweiten Arbeitsgang werden der Halmteiler und die Kontaktelektrode auf eine Höhe abgesenkt, bei der sich der Halmteiler unterhalb der Wuchshöhe der Kulturpflanzen und oberhalb der Wuchshöhe der kleineren Kulturpflanzenbegleiter befindet, so dass er die Kulturpflanzen an der Kontaktelektrode vorbeiführen kann. Die Kontaktelektrode ist unterhalb des Halmteilers angebracht, so dass sie in Kontakt mit den kleineren Kulturpflanzenbegleitern kommt, wenn sich die Kontaktelektrode durch das Feld bewegt. In dem zweiten Arbeitsgang werden dann also die kleineren Kulturpflanzenbegleiter unschädlich gemacht.

In einer bevorzugten Ausführungsform ist die Länge der Kontaktelektrode variabel. Unter "Länge" wird die Ausdehnung der Kontaktelektrode in Richtung der Schwerkraft verstanden. "Breite" bezeichnet die Ausdehnung der Kontaktelektrode senkrecht zur Schwerkraft und quer (vorzugsweise senkrecht) zur Bewegungsrichtung. "Dicke" bezeichnet die Ausdehnung der Kontaktelektrode in Bewegungsrichtung. Es ist beispielsweise denkbar, dass die Kontaktelektrode ein oder mehrere Metallbänder aufweist, die beispielsweise auf einer Spule aufgerollt sind. Die Länge der Metallbänder kann durch Abwickeln von der Spule bzw. Aufwickeln auf die Spule variiert werden. Denkbar ist auch, dass ein Teil der Kontaktelektrode hinter dem Halmteiler positioniert werden kann und bei Bedarf nach einer längeren Kontaktelektrode nach unten (in Richtung der Schwerkraft) ausgefahren werden kann. Eine in der Länge variabel gestaltete Kontaktelektrode hat den Vorteil, dass sie auf die Wuchshöhe der Kulturpflanzenbegleiter und auf die Differenz in der Wuchshöhe der Kulturpflanzen und Kulturpflanzenbegleiter optimal eingestellt werden kann.

Insbesondere für den Fall, dass die erfindungsgemäße Vorrichtung zur Bekämpfung von sowohl kleineren als auch größeren Kulturpflanzenbegleitern ausgerichtet ist, kann die Kontaktelektrode (auch) in ihrer Breite variabel gestaltet sein. Wird die Kontaktelektrode zur Bekämpfung von kleineren Kulturpflanzenbegleitern eingesetzt, sollte sie nicht über die seitlichen Ränder des Halmteilers hinausragen, da die Kulturpflanzen sonst in Kontakt mit der Kontaktelektrode kommen können. Wird die Kontaktelektrode zur Bekämpfung von größeren Kulturpflanzenbegleitern eingesetzt, so kann die Kontaktelektrode über die seitlichen Ränder des Halmteilers hinausragen, da Kulturpflanzen aufgrund der geringeren Wachstumshöhe nicht bis an die Kontaktelektrode heranreichen. Eine über die seitlichen Ränder des Halmteilers hinausragende Kontaktelektrode hat den Vorteil, dass sie bei einer Bewegung durch das Feld eine größere Fläche abdeckt und damit eine größere Zahl an größeren Kulturpflanzenbegleitern erfasst und unschädlich macht. In einer bevorzugten Ausführungsform ist die Kontaktelektrode daher so gestaltet, dass ihre Ausdehnung quer zur Bewegungsrichtung (Breite) variiert werden kann. Es ist beispielsweise denkbar, eine faltbare Kontaktelektrode vorzusehen, die im zusammengefalteten Zustand nicht über die seitlichen Ränder des Halmteilers hinausragt, aber im ausgefalteten Zustand über die seitlichen Ränder des Halmteilers hinausragt.

Die Erfindung wird nachfolgend anhand von Figuren näher beschrieben, ohne die Erfindung auf die in den Figuren gezeigten Merkmale und Merkmalskombinationen beschränken zu wollen.

Es zeigen:
Fig. 1 zeigt schematisch eine Ausführungsform eines Halmteilers (a) in einer Frontalansicht, (b) in einer ersten Seitenansicht, (c) von der Unterseite, (d) in einer zweiten Seitenansicht, (e) in einer Rückansicht und (f) in einer Aufsicht.
   Der Halmteiler (10) umfasst zwei Schenkel (11, 11') die in einer Spitze (12) zusammenlaufen. An der der Spitze gegenüberliegenden Seite befindet sich die Basis (13).
Fig. 2 zeigt schematisch den Halmteiler (10) aus Fig. 1 zusammen mit einer Kontaktelektrode (a) in einer Frontalansicht, (b) in einer ersten Seitenansicht, (c) von der Unterseite, (d) in einer zweiten Seitenansicht, (e) in einer Rückansicht und (f) in einer Aufsicht.
   Die Kontaktelektrode (20) befindet sich unterhalb des Halmteilers (10). Die Kontaktelektrode (20) befindet sich ferner an einer der Spitze (12) des Halmteilers (10) gegenüberliegenden Seite (Basis 13). Die Kontaktelektrode (20) kann an dem Halmteiler befestigt sein. Die Kontaktelektrode (20) umfasst drei flexible Metallbänder.

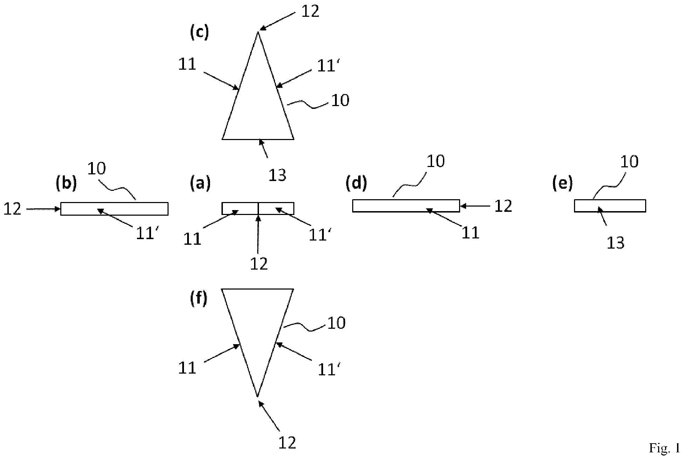

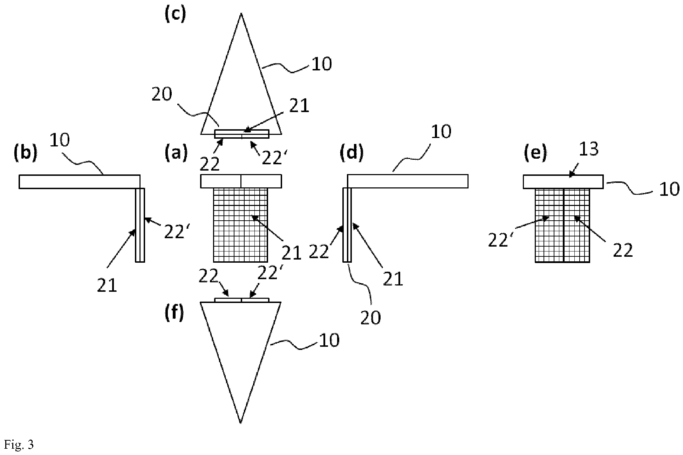

Fig. 3 zeigt schematisch den Halmteiler (10) aus Fig. 1 zusammen mit einer Kontaktelektrode (a) in einer Frontalansicht, (b) in einer ersten Seitenansicht, (c) von der Unterseite, (d) in einer zweiten Seitenansicht, (e) in einer Rückansicht und (f) in einer Aufsicht.
   Die Kontaktelektrode (20) befindet sich unterhalb des Halmteilers (10). Die Kontaktelektrode (20) befindet sich ferner an einer der Spitze (12) des Halmteilers (10) gegenüberliegenden Seite (Basis 13). Die Kontaktelektrode (20) kann an dem Halmteiler befestigt sein. Die Kontaktelektrode (20) ist als Gitter oder Matte ausgeführt; sie umfasst drei Teile, einen Basisteil (21) und zwei Seitenteile (22, 22'). Die Seitenteile (22, 22') sind nach außen klappbar ausgeführt; sie sind in Figur 3 eingeklappt.

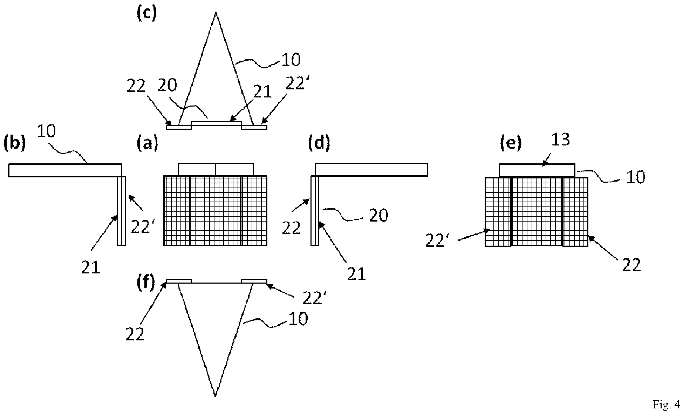

Fig. 4 zeigt schematisch den Halmteiler (10) mit der Kontaktelektrode (20) aus Fig. 3. Die Seitenteile (22, 22') sind nach außen klappbar ausgeführt; sie sind in Figur 4 zu den Seiten ausgeklappt, so dass sich eine größere Elektrodenfläche ergibt.

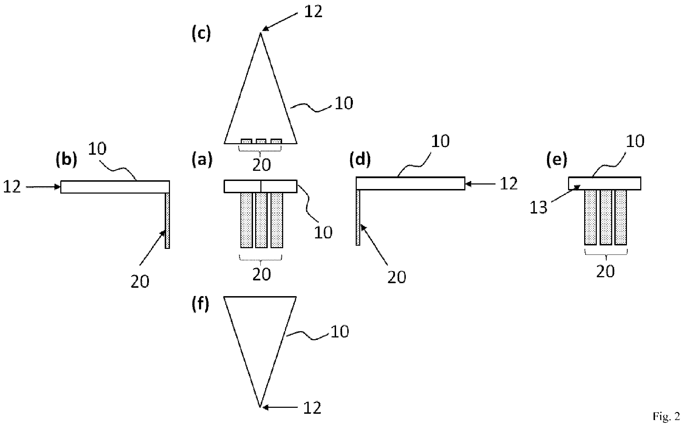

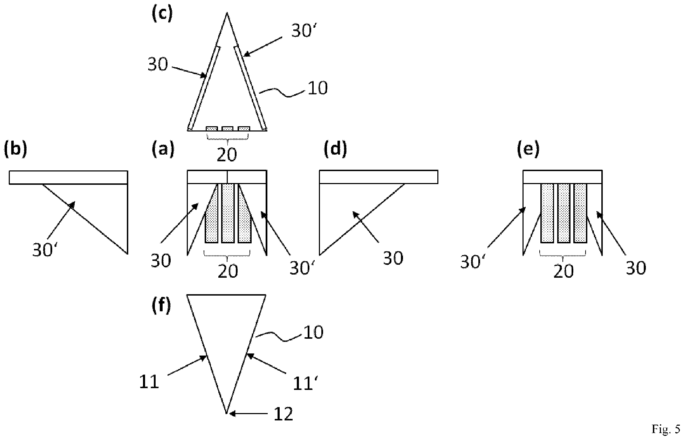

Fig. 5 zeigt schematisch den Halmteiler (10) mit der Kontaktelektrode (20) aus Fig. 2. An den Schenkeln (11, 11') des Halmteilers (10) sind Führungsflanken (30, 30') angebracht. Zwischen den Führungsflanken kann eine Lichtschranke angebracht sein, die registriert, ob sich eine Pflanze zwischen den Flanken befindet.

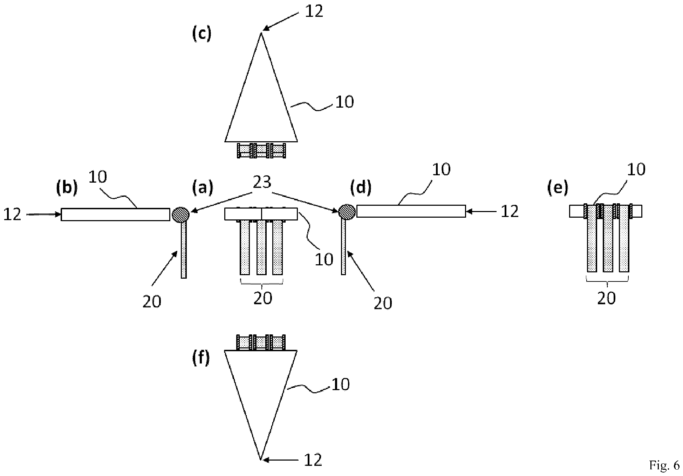

Fig. 6 zeigt schematisch den Halmteiler (10) aus Fig. 1 zusammen mit einer Kontaktelektrode (a) in einer Frontalansicht, (b) in einer ersten Seitenansicht, (c) von der Unterseite, (d) in einer zweiten Seitenansicht, (e) in einer Rückansicht und (f) in einer Aufsicht.
   Die Kontaktelektrode (20) umfasst drei Metallbänder, die jeweils auf eine Spule (23) aufgerollt sind. Durch Aufwickeln der Metallbänder auf die Spulen lässt sich die Länge der Kontaktelektrode verringern; durch Abwickeln der Metallbänder von den Spulen lässt sich die Länge der Kontaktelektrode vergrößern.

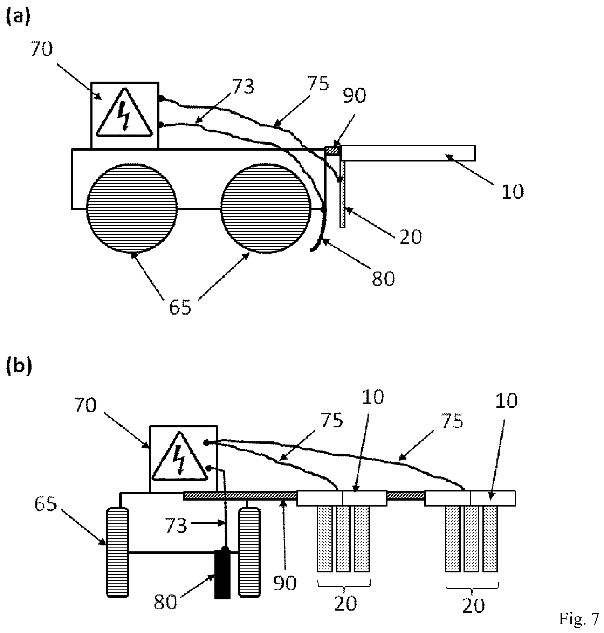

Fig. 7 zeigt schematisch ein erfindungsgemäßes Fahrzeug (a) in einer Seitenansicht und (b) in einer Frontalansicht.
   Das erfindungsgemäße Fahrzeug bewegt sich auf Rädern (65) durch das Feld. Im vorderen Bereich des Fahrzeugs ist ein Ausleger (90) angebracht, an dem zwei Halmteiler (10) und zwei Kontaktelektroden (20) angebracht sind. Es handelt sich dabei um die Halmteiler (10) und Kontaktelektroden (20) aus Figur 2. Die Halmteiler (10) und Kontaktelektroden (20) sind voneinander beabstandet und nebeneinander angeordnet, und erstrecken sich quer (im vorliegenden Fall in einem Winkel von 90°) zur Bewegungsrichtung und senkrecht zur Schwerkraft.
   Das Fahrzeug umfasst eine Spannungsquelle (70). Die Kontaktelektroden (20) sind über Kabel (75) mit der Spannungsquelle (70) verbunden. Das Fahrzeug umfasst eine Gegenelektrode (80), die als Schleifelektrode Kontakt zum Erdboden hat. Die Gegenelektrode ist über Kabel (73) ebenfalls mit der Spannungsquelle (70) verbunden. Es ist denkbar, dass der Ausleger (90) höhenverstellbar ausgeführt ist, so dass die Halmteiler (10) auf eine Höhe gebracht werden können, die oberhalb der Wuchshöhe der Kulturpflanzenbegleiter und unterhalb der Wuchshöhe der Kulturpflanzen liegen. Die Kontaktelektroden befinden sich dann unterhalb des Halmteilers auf Wuchshöhe der Kulturpflanzenbegleiter.

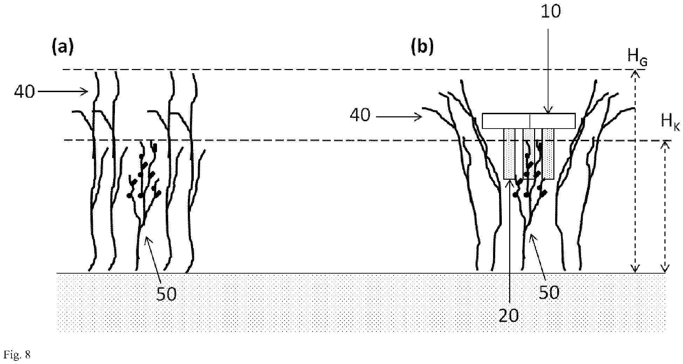

Fig. 8 zeigt schematisch einen Halmteiler (10) zusammen mit einer Kontaktelektrode (20) im Einsatz bei der Bekämpfung eines Kulturpflanzenbegleiters (50) in einem Bestand von Kulturpflanzen (40). Bei dem Halmteiler (10) und der Kontaktelektrode (20) handelt es sich um diejenigen aus Fig. 2. In Fig. 8(a) ist zu erkennen, dass der Kulturpflanzenbegleiter (50) eine Wuchshöhe H_{K} hat, die geringer ist als die Wuchshöhe der umgebenden Kulturpflanzen H_{G}.
In Fig. 8(b) ist zu erkennen, dass der Halmteiler (10) auf eine Höhe gebracht ist, die geringer ist als die Wuchshöhe H_{G} der Kulturpflanzen aber größer ist als die Wuchshöhe H_{K} des Kulturpflanzenbegleiters. Die Kontaktelektrode (20) befindet sich unterhalb des Halmteilers (10) auf der Höhe der Wuchshöhe des Kulturpflanzenbegleiters.
In Fig. 8(b) ist zu erkennen, dass sich der Halmteiler zusammen mit der Kontaktelektrode (20) aus dem Bild heraus nach vorne bewegt und dabei die Kulturpflanzen (40) zur Seite und an der Kontaktelektrode (20) vorbei führt. Der Kulturpflanzenbegleiter (50) mit der geringeren Wuchshöhe H_{K} wird von dem Halmteiler (10) nicht erfasst. Er kommt in Kontakt mit der Kontaktelektrode (20).

## Patentansprüche

1. Verfahren zur Bekämpfung von Kulturpflanzenbegleitern in einem Feld von Kulturpflanzen,
- Bereitstellen einer Vorrichtung umfassend einen Halmteiler und eine Kontaktelektrode,
- Bringen des Halmteilers auf eine Höhe, die oberhalb der Wuchshöhe der Kulturpflanzenbegleiter und unterhalb der Wuchshöhe der Kulturpflanzen liegt,
- Bringen der Kontaktelektrode auf eine Höhe, die unterhalb des Halmteilers in Wuchshöhe der Kulturpflanzenbegleiter liegt,
- Bewegen der Vorrichtung durch ein Feld für Kulturpflanzen, in dem Kulturpflanzenbegleiter auftreten,
- während des Bewegens
∘ Vorbeiführen der Kulturpflanzen an der Kontaktelektrode mittels des Halmteilers,
∘ Kontaktieren der Kulturpflanzenbegleiter mit der Kontaktelektrode, wobei bei einem Kontakt der Kontaktelektrode mit einem Kulturpflanzenbegleiter ein Strom von der Kontaktelektrode durch einen Teil des Kulturpflanzenbegleiters zu einer Gegenelektrode fließt, wobei der Kulturpflanzenbegleiter geschwächt oder zerstört wird.

2. Verfahren gemäß Anspruch 1, wobei eine Spannung zwischen der Kontaktelektrode und der Gegenelektrode nur dann herrscht, wenn sich ein Kulturpflanzenbegleiter der Kontaktelektrode nähert.

3. Verfahren gemäß einem der Ansprüche 1 oder 2,
- wobei in dem Feld größere Kulturpflanzenbegleiter vorhanden sind, die eine größere Wuchshöhe als die Kulturpflanzen aufweisen und kleinere Kulturpflanzen vorhanden sind, die eine kleinere Wuchshöhe als die Kulturpflanzen aufweisen,
- wobei in einem ersten Schritt der Halmteiler auf eine Höhe gebracht wird, die oberhalb der Wuchshöhe der größeren Kulturpflanzenbegleiter liegt, die Kontaktelektrode auf eine Höhe gebracht wird, die unterhalb des Halmteilers in Wuchshöhe der größeren Kulturpflanzenbegleiter und oberhalb der Höhe der Kulturpflanzen liegt, der Halmteiler zusammen mit der Kontaktelektrode durch das Feld bewegt wird und die Kontaktelektrode dabei in Kontakt mit den größeren Kulturpflanzenbegleitern kommt und diese dadurch geschwächt oder zerstört werden
- wobei in einem dem ersten Schritt nachfolgenden zweiten Schritt, der Halmteiler auf eine Höhe gebracht wird, die unterhalb der Wuchshöhe der Kulturpflanzen und oberhalb der Wuchshöhe der kleineren Kulturpflanzenbegleiter liegt, die Kontaktelektrode auf eine Höhe gebracht wird, die unterhalb des Halmteilers in Wuchshöhe der kleineren Kulturpflanzenbegleiter liegt, der Halmteiler zusammen mit der Kontaktelektrode durch das Feld bewegt wird und die Kontaktelektrode dabei in Kontakt mit den kleineren Kulturpflanzenbegleitern kommt und diese dadurch geschwächt oder zerstört werden.

4. Vorrichtung zur Bekämpfung von Kulturpflanzenbegleitern in einem Feld von Kulturpflanzen, umfassend
- einen Halmteiler, umfassend zwei Schenkel, wobei die Schenkel in einer Spitze zusammenlaufen,
- eine Kontaktelektrode, wobei sich die Kontaktelektrode
∘ unterhalb des Halmteilers befindet und
∘ an einer Seite des Halmteiler befindet, die der Spitze des Halmteilers gegenüber liegt,
- Befestigungsmittel zum Befestigen des Halmteilers an einem Fahrzeug in einer Höhe, die oberhalb der Wuchshöhe der Kulturpflanzenbegleiter und unterhalb der Wuchshöhe der Kulturpflanzen liegt.

5. Vorrichtung gemäß Anspruch 4, ferner umfassend einen Sensor zur Erkennung einer Kulturpflanze, der sich die Kontaktelektrode während der Bewegung nähert.

6. Vorrichtung gemäß Anspruch 5, ferner umfassend einen Aktuator, der eine Spannung zwischen der Kontaktelektrode und der Gegenelektrode anlegt, sobald der Sensor eine Kulturpflanze erkennt, die sich der Kontaktelektrode nähert.

7. Vorrichtung gemäß einem der Ansprüche 4 bis 6, wobei die Kontaktelektrode in ihrer Ausdehnung quer zur Bewegungsrichtung variabel ist.

8. Vorrichtung gemäß einem der Ansprüche 4 bis 7, wobei die Kontaktelektrode über einen Mittelteil und zwei Seitenteile verfügt, wobei die Seitenteile ausklappbar gestaltet sind und im ausgeklappten Zustand über die Schenkel des Halmteilers hinausragen.

9. Vorrichtung gemäß einem der Ansprüche 4 bis 8, **dadurch gekennzeichnet, dass** die Länge der Kontaktelektrode variabel ist.

10. Fahrzeug zur Bekämpfung von Kulturpflanzenbegleitern in einem Feld von Kulturpflanzen, umfassend
- einen Halmteiler, umfassend zwei Schenkel, wobei die Schenkel in einer Spitze zusammenlaufen,
- eine Kontaktelektrode,
- eine Spannungsquelle und
- eine Gegenelektrode,
**dadurch gekennzeichnet, dass** der Halmteiler höhenverstellbar ist und sich die Kontaktelektrode, unterhalb des Halmteilers befindet und an einer Seite des Halmteiler befindet, die der Spitze des Halmteilers gegenüber liegt.

11. Fahrzeug gemäß Anspruch 10, ferner umfassend eine Sensoreinheit zur Ermittlung der Wuchshöhe der Kulturpflanzen und/oder der Kulturpflanzenbegleiter.

12. Fahrzeug gemäß Anspruch 10 oder 11, ferner umfassend eine Höhenanpassungseinheit zur automatisierten Einstellung der Höhe des Halmteilers und/oder der Kontaktelektrode.

13. Fahrzeug gemäß einem der Ansprüche 10 bis 12 umfassend eine Vorrichtung gemäß einem der Ansprüche 4 bis 9.

14. Verwendung einer Vorrichtung gemäß einem der Ansprüche 4 bis 9 und/oder einem Fahrzeug gemäß einem der Ansprüche 10 bis 13 zur Bekämpfung von Pflanzenbegleitern in einem Feld von Kulturpflanzen, wobei die Kulturpflanzenbegleiter eine geringere Wuchshöhe aufweise als die Kulturpflanzen.
